# EUROPEAN PATENT SPECIFICATION

(11) **EP 0 683 810 B1**
(45) Date of publication and mention of the grant of the patent: **24.06.1998**
(21) Application number: 95902121.3
(22) Date of filing: 03.12.1994
(51) Int. Cl.: C09K 5/04

(54) **AZEOTROPIC MIXTURE FOR THE USE AS REFRIGERANT MEDIA**
AZEOTROPES GEMISCH ZUM GEBRAUCH ALS KÜHLMITTEL
MELANGE AZEOTROPE UTILISE COMME REFRIGERANT

(30) Priority: 15.12.1993 IT PN930075
(43) Date of publication of application: 29.11.1995
(73) Proprietor: Zanussi Elettromeccanica S.p.A., I-33170 Pordenone (IT)
(72) Inventor: BELLOMO, Matteo, I-10024 Moncalieri (IT); KHMELNJUCK, Michael G., IECS Ltd. Inst. of Energy, Odessa, 100 (UA); LAVRENCHENKO, Georgi K., IECS Ltd. Inst. of Energy, Odessa, 100 (UA); PLUGNIKOV, O., Vesta, Household Elec. Machines and, Kiev (UA); POL, Lanfranco, I-32014 Ponte nelle Alpi, Belluno (IT); VOZNIJ, V., Vesta, Household Elec. Machines and, Kiev (UA)
(74) Representative: Giugni, Valter
(86) International application number: EP9404026
(87) International publication number: WO9516757

(56) References cited:
- EP-A- 0 565 265
- WO-A-92/17558
- WO-A-93/01152
- PATENT ABSTRACTS OF JAPAN vol. 016, no. 176 (C-0934) 27 April 1992 & JP,A,04 018 485 (SANYO ELECTRIC CO LTD) 22 January 1992
- JOURNAL OF ENERGY RESOURCES TECHNOLOGY, vol.116, no.2, June 1994, UNITED STATES pages 148 - 154 KIM, M.S. ET AL 'Performance evaluation of two azeotropic refrigerant mixture of HFC-134a with R-290 (propane) and R-600a (isobutane'
- PATENT ABSTRACTS OF JAPAN vol. 13, no. 394 (C-631) & JP,A,01 139 675 (ASAHI GLASS CO LTD) 1 June 1989

## Description

The present invention refers to new refrigerant media for use in refrigeration circuits as a replacement for chlorofluorocarbons (CFCs) in view of reducing risks in connection with the environmental pollution and, in particular, the depletion of that ozone layer in the stratosphere which plays a vital role in protecting the earth against solar UV radiation.

This is largely known to currently represent one among the most abundantly debated, heartfelt problems within the whole environmental protection issue, and both scientific and industrial organizations and authorities are making huge efforts in searching for and experimenting with new media that may prove helpful in solving it.

In this connection, one of the most frequently followed routes seems to be the identification of appropriate azeotropic mixtures. However, azeotropy is known to be an unpredictable phenomenon and the search for new azeotropic mixtures which actually have all of the properties that are required for them to be capable of being effectively used as refrigerant media, is not easy.

The patent specification US-A-4,155,865 discloses an azeotropic mixture which essentially consists of approx. 69.1 to 99.5 weight-percent of 1,1,2,2-tetrafluoroethane and approx. 0.5 to 30.9 weight-percent of 1,1,1,2-tetrafluorochloroethane. However, such a mixture is still containing a fluid, ie. tetrafluorochloroethane, which has been included in the EEC Regulations no. 594/91, dated March 4, 1991, which cover substances that are likely to deplete the ozone layer. Its production and use shall as a consequence be gradually phased out.

It is therefore a main purpose of the present invention to identify, in view of their use as refrigerant media in refrigeration circuits and similar applications, azeotropic mixtures that do not contain any environmentally noxious fluids that are likely to be banned.

According to a feature set forth in the hereto appended claim 1, the azeotropic mixtures that have been identified in this connection contain isobutane (also known as R600a in the trade) as a common component and a fluorinated hydrocarbon as an additional component, said components being invariably excluded from the list of substances that have to be banned according to the international regulations.

The primary advantage offered by the azeotropic mixtures is commonly known to lie in the consistency of both pressure and temperature parameters during phase transition processes, ie. evaporation and condensation. Such a particular property eliminates the instability phenomena that take place inside heat exchangers and throttling elements, thereby making it much more easy to design the appliances.

These and further advantages and features of the present invention will be more clearly understood from the following description which is given by way of non-limiting example with references to both the examples described in detail herein and the accompanying Tables 1 through to 6.

As mentioned, the azeotropic mixtures to which the present invention refers are based on the use of isobutane (R600a). These mixtures are pure azeotrope fluids, ie. fluids evaporating constantly at 20°C.

Within the scope of the present invention fall of course all those mixtures which, while maintaining their components in each case unchanged, differ from each other for a different per-cent content of the same components in the mixture. These mixture behave like pure azeotrope fluids even under other temperature and pressure conditions differing fron the ones that are specifically indicated here; however, in refrigeration and also other applications they essentially behave as azeotrope fluids with respect to both their thermodynamic properties and the peculiarity of not segregating or fractionating during the boiling phase.

### First type of azeotropic mixture

The basic composition of the mixture is the pure azeotrope which consists of 75-percent difluoroethane [C₂H₄F₂] also known as refrigerant R152a and 25-percent isobutane [(CH₃)₂CHCH₃] also known as refrigerant R600a at 20°C.

This mixture has a boiling point of -29.42°C at a pressure of 0.1013 MPa.

The composition range within which such a mixture does not deviate to any significant extent from a typical azeotropic behaviour may be defined by following percentages referred to the weight of the individual components: 55 to 92 weight-percent of difluoroethane and 8 to 45 weight-percent of isobutane. In a preferred manner, the percent composition in weight of the mixture should be situated anywhere between 73 and 77 weight-percent of difluoroethane and 23 and 27 weight-percent of isobutane.

Such a mixture can be used in connection with refrigeration apparatuses operating on a compression and expansion cycle and, as compared with conventional refrigerant fluids, enables a smaller amount of fluid to be filled in the circuit and the energy usage by the equipment to be reduced. Furthermore, this mixture is effective in boosting the performance level of hermetic compressors with respect to the level achievable with the use of conventional refrigerant media.

Experiments have been carried out in view of testing the performance capabilities of this mixture on a motor-driven compressor for household refrigeration equipment. The most significant results of such experiments are summarized in the accompanying Table 1.

Specifically, Table 1 summarizes the results of a full set of calorimetric tests that have been carried out on a motor-driven compressor having a piston displacement volume of 5.7 c.c. From this Table it can be inferred that both the refrigerating capacity and the coefficient of performance are improved with respect to the corresponding values obtained by the same compressor when using tetrafluoroethane (R134a) as the refrigerant fluid, ie. the hitherto used substance that has been taken as the reference in this context.

In particular, the increase in the coefficient of performance (COP) at the reference temperature of -25% can be noticed to amount to approx. 8%. Even the refrigerating capacity is shown to be improved by as much as 13.6% over the one obtained when using R134a at the same evaporation temperature.

Further tests have been performed on a refrigeration machine provided with a hermetic compressor of the XKB-6 type manufactured in East-European countries, by using different percent compositions in weight of R152a and R600a, as compared to a mixture of R152a and R12 (known also as R500 in the trade) in which the percentage in weight of R12 amounted to 74%, under following process conditions: boiling point 253°K (-20°C), condensation temperature 313°K (40°C), compressor suction temperature 305°K (32°C). Based on an analysis of the data appearing in the accompanying Table 2, it can be inferred that the refrigerant mixtures according to the invention show improved thermodynamic properties and, as a result, an improved thermodynamic efficiency. In particular, the refrigerating capacity appears to be improved by an extent ranging from 2 to 5% with respect to the reference refrigerant. Furthermore, the mixture according to the present invention is by no means harmful for the ozone layer in the stratosphere, since it basically uses R600a instead of R12.

### Second type of azeotropic mixture

The composition of this mixture according to the invention is as follows: 95 to 98 weight-percent of an azeotropic mixture (R507) and 2 to 5 weight-percent of isobutane (R600a), wherein said azeotropic mixture (R507) consists of 16.5 mole-percent of difluoroethane and 83.5 mole-percent of octafluoropropane (R218).

Even this third type of mixture does not contain any fluid which might prove harmful for the ozone layer in the stratosphere and can be used in connection with refrigeration apparatuses operating on a compression and expansion cycle.

Experiments have been performed on a refrigeration machine provided with a hermetic compressor of the XKB-6 type manufactured in East-European countries, by using different mole-percent compositions of the mixture, as compared to the R507 mixture alone, under following process conditions: boiling point 253°K (-20°C), condensation temperature 313°K (40°C), compressor suction temperature 305°K (32°C). Based on an analysis of the data appearing in the accompanying Table 3, it can be inferred that the refrigerant mixtures according to the invention show improved thermodynamic properties and, as a result, an improved thermodynamic efficiency. In particular, the refrigerating capacity appears to be improved by an extent ranging from 2 to 6% and the coefficient of performance by an extent ranging from 1 to 4% with respect to the reference refrigerant mixture.

Conclusively, it will have been appreciated that the azeotropic mixtures to be used as refrigerant media according to the present invention are substances that do not prove harmful for the ozone layer and, at the same time, enable performance capabilities to be achieved which are clearly better than those obtainable by using conventional refrigerant fluids. It will further be appreciated that the afore illustrated mixtures may also be embodied with their components combined in any different composition as compared to the afore described ones, without departing from the scope of the present invention as defined in the appended claims.

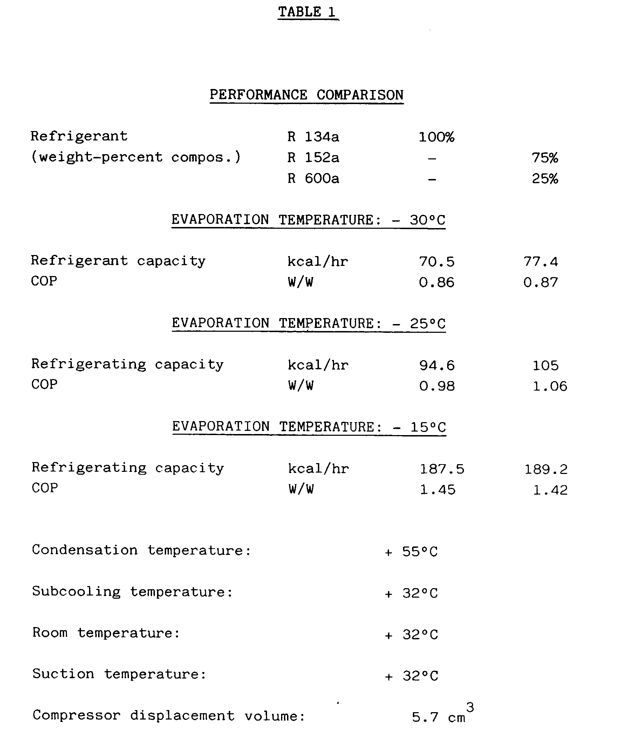

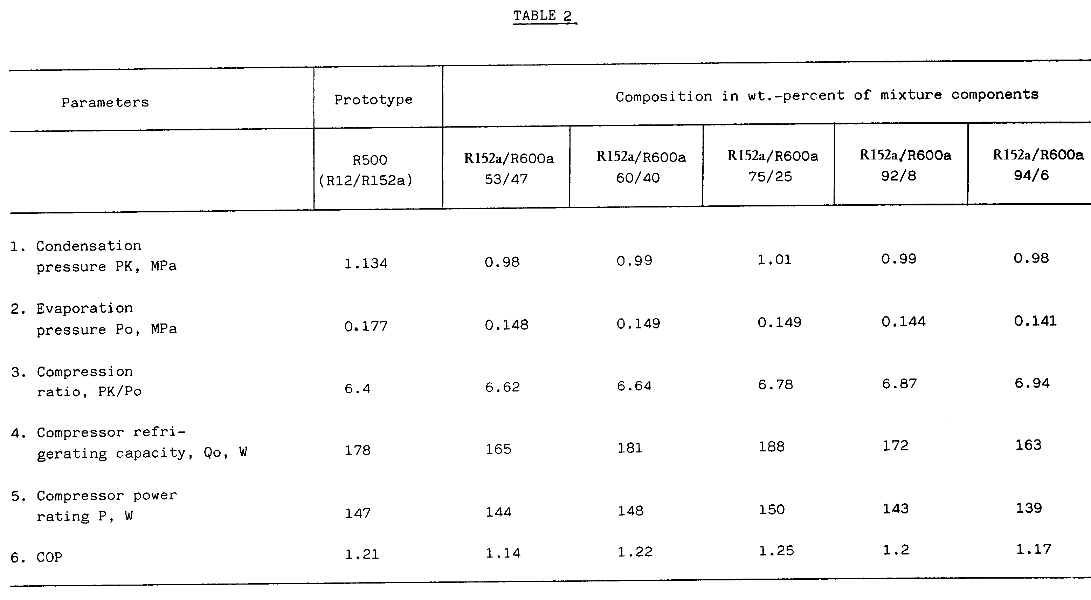

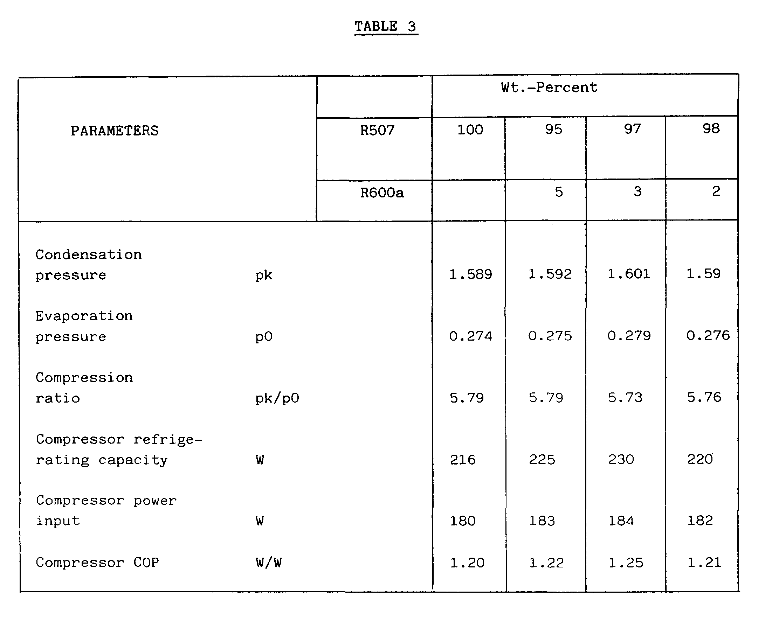

## Claims

1. An azeotropic mixture for the use as a refrigerant medium consisting of isobutane (CH₃)₂CHCH₃, also known as refrigerant R600a, **characterized in that** it also includes difluoroethane C₂H₄F₂, also known as refrigerant R152a.

2. An azeotropic mixture for the use as a refrigerant medium according to claim 1, **characterized in that** it consists of 55 to 92 weight-percent difluoroethane and of 8 to 45 weight-percent isobutane.

3. An azeotropic mixture for the use as a refrigerant medium according to claim 1, **characterized in that** it consists of 73 to 77 weight-percent difluoroethane and of 23 to 27 weight-percent isobutane.

4. An azeotropic mixture for the use as a refrigerant medium according to claim 1, **characterized in that** it includes difluoroethane as the first component of an already known azeotropic mixture, also known as refrigerant R507, which has octafluoropropane C₃F₈, also known as refrigerant R218, as the second component.

5. An azeotropic mixture for the use as a refrigerant medium according to claim 4, **characterized in that** it consists of 95 to 98 weight-percent R507 and of 2 to 5 weight-percent isobutane.

## Patentansprüche

1. Azeotropes Gemisch zum Gebrauch als Kühlmittel, umfassend Isobutan (CH₃)₂CHCH₃, auch bekannt als Kühlmittel R600a, **dadurch gekennzeichnet, daß** es außerdem Difluorethan C₂H₄F₂, auch bekannt als Kühlmittel R152a, umfaßt.

2. Azeotropes Gemisch zum Gebrauch als Kühlmittel nach Anspruch 1, **dadurch gekennzeichnet, daß** es 55 bis 92 Gewichtsprozente Difluorethan und 8 bis 45 Gewichtsprozente Isobutan umfaßt.

3. Azeotropes Gemisch zum Gebrauch als Kühlmittel nach Anspruch 1, **dadurch gekennzeichnet, daß** es 73 bis 77 Gewichtsprozente Difluorethan und 23 bis 27 Gewichtsprozente Isobutan umfaßt.

4. Azeotropes Gemisch zum Gebrauch als Kühlmittel nach Anspruch 1, **dadurch gekennzeichnet, daß** es Difluorethan als ersten Bestandteil eines bereits bekannten azeotropen Gemisches, auch bekannt als Kühlmittel R507, und Octafluorpropan C₃F₈, auch bekannt als Kühlmittel R218, als zweiten Bestandteil umfaßt.

5. Azeotropes Gemisch zum Gebrauch als Kühlmittel nach Anspruch 4, **dadurch gekennzeichnet, daß** es 95 bis 98 Gewichtsprozente R507 und 2 bis 5 Gewichtsprozente Isobutan umfaßt.

## Revendications

1. Mélange azéotrope utilisé comme réfrigérant, constitué d'isobutane (CH₃)₂CHCH₃, appelé également réfrigérant R600a, caractérisé en ce qu'il comporte également du difluoroéthane C₂H₄F₂, appelé également réfrigérant R152a.

2. Mélange azéotrope utilisé comme réfrigérant selon la revendication 1, caractérisé en ce qu'il est constitué de 55 à 92 pour cent en poids de difluoroéthane et de 8 à 45 pour cent en poids d'isobutane.

3. Mélange azéotrope utilisé comme réfrigérant selon la revendication 1, caractérisé en ce qu'il est constitué de 73 à 77 pour cent en poids de difluoroéthane et de 23 à 27 pour cent en poids d'isobutane.

4. Mélange azéotrope utilisé comme réfrigérant selon la revendication 1, caractérisé en ce qu'il comporte du difluoroéthane comme premier composant d'un mélange azéotrope déjà connu, appelé également réfrigérant R507, comportant de l'octafluoropropane C₃F₈, appelé également réfrigérant R218, comme deuxième composant.

5. Mélange azéotrope utilisé comme réfrigérant selon la revendication 4, caractérisé en ce qu'il est constitué de 95 à 98 pour cent en poids de R507 et de 2 à 5 pour cent en poids d'isobutane.
